# EUROPÄISCHE PATENTSCHRIFT

(11) **EP 1 318 057 B1**
(45) Veröffentlichungstag und Bekanntmachung des Hinweises auf die Patenterteilung: **05.04.2006**
(21) Anmeldenummer: 03004561.1
(22) Anmeldetag: 22.07.1998
(51) Int. Cl.: F16D 65/16, B60T 13/74, F16D 55/227, F16D 65/20, F16D 65/21, F16D 65/14

(54) **Verfahren zum Betreiben einer hydraulischen Fahrzeugbremse mit elektrisch betätigter Feststelleinrichtung**
Method for operating a hydraulic vehicle brake with electrically actuated locking device
Procédé de commande d'un frein de véhicule hydraulique avec dispositif de verrouillage à actionnement électrique

(30) Priorität: 25.07.1997 DE 19732168
(43) Veröffentlichungstag der Anmeldung: 11.06.2003
(62) Teilanmeldung aus: 98938698.2
(73) Patentinhaber: LUCAS INDUSTRIES public limited company, Solihull B90 4LA (GB)
(72) Erfinder: Poertzgen, Gregor, 56068 Koblenz (DE); Wörsdorfer, Karl Friedrich, 55257 Budenheim (DE); Erben, Ralf, 56132 Kemmenau (DE); Zenzen, Guido, 56290 Macken (DE)
(74) Vertreter: Beyer, Andreas

(56) Entgegenhaltungen:
- DE-A- 19 526 645
- DE-A- 19 536 694
- DE-A- 19 536 695
- US-A- 4 804 073
- US-A- 5 139 315

## Beschreibung

Die Erfindung betrifft ein Verfahren zum Betreiben einer hydraulischen Fahrzeugbremse mit elektrisch betätigter Feststelleinrichtung.

Aus der EP 0 729 871 A1 ist eine hydraulische Fahrzeugbremse bekannt, bei der ein Reibbelag mittels eines Bremskolbens durch Hydraulikdruck gegen eine Bremsscheibe gepresst werden kann, um deren Drehung abzubremsen. Hierzu wird in üblicher Weise Hydraulikfluid unter Druck in eine Hydraulikkammer eingeleitet, deren eine Begrenzungswand durch den Bremskolben gebildet ist. Der Druck in der Hydraulikkammer führt dann zur Verschiebung des Bremskolbens und damit des Reibbelags in Richtung auf die Bremsscheibe. Damit diese bekannte Fahrzeugbremse nicht nur als Betriebsbremse, sondern darüber hinaus als Feststellbremse - auch Parkbremse genannt - verwendet werden kann, weist sie eine Spindel/Mutter-Anordnung zum mechanischen Feststellen des Bremskolbens in einem Zustand auf, in dem der Reibbelag sich in Eingriff mit der Bremsscheibe befindet.

Der Erfindung liegt die Aufgabe zugrunde, ein verbessertes Verfahren zum Betreiben einer hydraulischen Fahrzeugbremse mit elektrisch betätigter Feststelleinrichtung anzugeben.

Diese Aufgabe ist erfindungsgemäß mit einem Verfahren gelöst, das die im Patentanspruch 1 angegebenen Merkmale aufweist.

Das erfindungsgemäße Verfahren gestattet den Einsatz einer Fahrzeugbremse, bei der die Spindel mittels eines Elektromotors angetrieben wird, als Feststellbremse. Hierzu wird zunächst die Spindel vom Elektromotor in einer ersten Drehrichtung derart drehangetrieben, dass die Mutter der Spindel/Mutter-Anordnung zum Bremskolben hin bewegt wird. Der Verlauf der Drehzahl und der Stromaufnahme des Elektromotors werden über die Zeit gemessen. Tritt ein plötzlicher Drehzahlabfall und ein damit korrespondierender Anstieg der Stromaufnahme auf, was bedeutet, dass die Mutter in Anlage mit dem Bremskolben geraten ist, werden die vor dem Drehzahlabfall bzw. vor dem Anstieg der Stromaufnahme geltenden Werte der Drehzahl und/oder der Stromaufnahme in einem Speicher als Referenzwerte abgelegt. Die Spindel wird in der ersten Drehrichtung weiter drehangetrieben, bis die weiter erfolgende Messung der Stromaufnahme ergibt, dass ein zuvor festgelegter, maximaler Wert der Stromaufnahme erreicht ist, der mit einer gewünschten Zuspannkraft korrespondiert. Sobald dieser Wert erreicht ist, wird der Elektromotor abgeschaltet und die Fahrzeugbremse erfüllt ihre Feststellfunktion.

Soll die Feststellbremse wieder gelöst werden, wird die Spindel entgegengesetzt zur ersten Drehrichtung drehangetrieben und es werden die momentane Drehzahl und/oder die momentane Stromaufnahme des Elektromotors mit dem entsprechenden, zuvor abgelegten Referenzwert verglichen. Der Zeitpunkt, an dem die momentane Drehzahl und/oder die momentane Stromaufnahme mit dem entsprechenden Referenzwert übereinstimmt, was gleichbedeutend mit dem Freikommen der Mutter von dem Bremskolben ist, wird erfasst und die Spindel wird entgegengesetzt zur ersten Drehrichtung weiter drehangetrieben, um einen gewünschten Abstand zwischen der Mutter und dem Bremskolben einzustellen, der zur einwandfreien Funktion der Fahrzeugbremse notwendig ist.

Das Einstellen eines gewünschten Abstandes zwischen der Mutter und dem Bremskolben kann beispielsweise dadurch erfolgen, dass die Spindel ab dem Zeitpunkt, an dem die momentane Drehzahl und/oder die momentane Stromaufnahme mit dem entsprechenden Referenzwert übereinstimmt, für eine festgelegte Zeitdauer entgegengesetzt zur ersten Drehrichtung drehangetrieben wird, wobei die Zeitdauer unter Berücksichtigung der vorhandenen Untersetzung der Drehzahl des Elektromotors so festgelegt ist, dass der gewünschte Abstand genau erreicht wird. Alternativ kann das weitere Drehantreiben der Spindel entgegengesetzt zur ersten Drehrichtung ab dem genannten Zeitpunkt solange erfolgen, bis eine bestimmte Anzahl von Drehzählimpulsen, die beispielsweise mittels des oben beschriebenen Hallsensors erfasst werden, erreicht ist. Die bestimmte Anzahl von Drehzählimpulsen ist wiederum so festgelegt, dass sie bei einer gegebenen Untersetzung der Drehzahl des Elektromotors zum gewünschten Abstand zwischen der Mutter und dem Bremskolben führt.

Besonders vorteilhaft ist es, wenn beim zuvor erläuterten Verfahren sowohl die Drehzahl als auch die Stromaufnahme des Elektromotors zur Steuerung herangezogen werden, da sich hierdurch eine gewisse Redundanz ergibt. Bei einer ordnungsgemäß funktionierenden Bremse müssen die Knickpunkte in den zeitlichen Verläufen der Drehzahl und der Stromaufnahme des Elektromotors jeweils zumindest nahezu synchron auftreten. Mögliche Funktionsstörungen können somit durch die Überwachung beider Größen frühzeitig erkannt werden.

Gemäß einer bevorzugten Ausgestaltung des erfindungsgemäßen Verfahrens zum Betreiben der Fahrzeugbremse als Feststellbremse wird aus mehreren der im Speicher abgelegten Drehzahl- und/oder Stromaufnahmereferenzwerte jeweils ein Mittelwert gebildet, um Toleranzen zu kompensieren, die sich durch normalen Verschleiß sowie auch aufgrund von Temperaturschwankungen ergeben können. Die Mittelwertbildung kann beispielsweise über eine bestimmte Anzahl von Betätigungen oder aber auch fortlaufend erfolgen.

Besonders bevorzugt ist das erfindungsgemäße Verfahren dahingehend weitergebildet, dass die eine bestimmte Zuspannkraft repräsentierende, maximale Stromaufnahme des Elektromotors automatisch in Abhängigkeit eines oder mehrerer Parameter variiert wird. Beispielsweise kann dadurch die Zuspannkraft der Fahrzeugbeladung und/oder auch der Neigung bzw. der Steilheit der Fahrbahn automatisch angepasst werden, denn es leuchtet ein, dass bei ebener Fahrbahn oder bei leerem Fahrzeug zum Feststellen desselben eine geringere Zuspannkraft erforderlich ist.

Ein Ausführungsbeispiel des erfindungsgemäßen Verfahrens wird im folgenden anhand der beigefügten, schematischen Figuren, die eine entsprechend ausgestattete Fahrzeugbremse zeigen, näher erläutert. Es zeigt:
- Fig. 1: die teilweise aufgebrochene Draufsicht auf eine hydraulische Fahrzeugbremse mit Feststell- und Notbremsfunktion, und
- Fig. 2A-2C: Diagramme, anhand derer ein Verfahren zum Betreiben der in Fig. 1 gezeigten Fahrzeugbremse als Feststellbremse beschrieben wird.

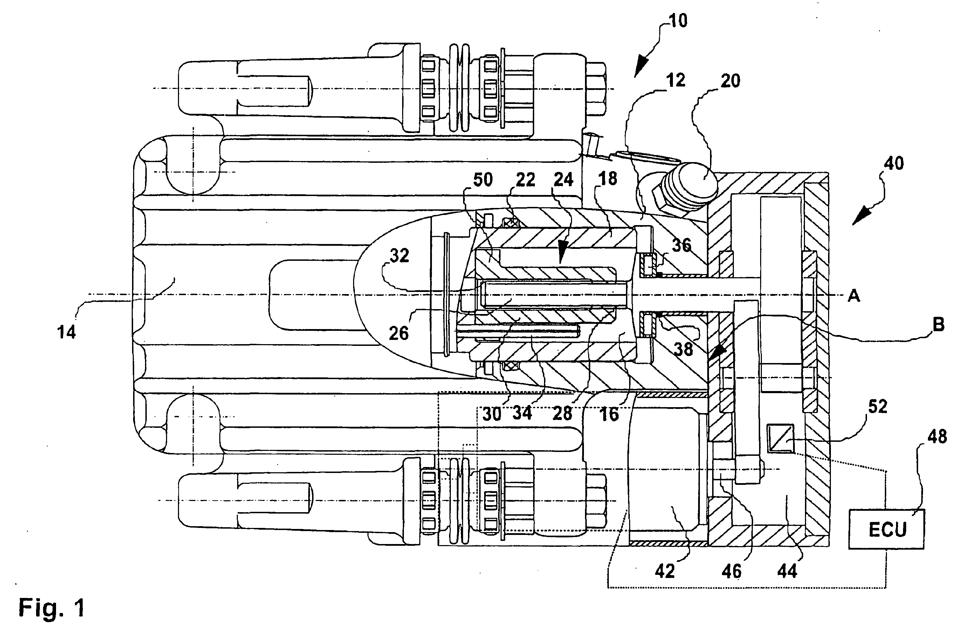

Die in Fig. 1 wiedergegebene und allgemein mit 10 bezeichnete Fahrzeugbremse ist hier als Schwimmsattel-Scheibenbremse ausgeführt, die in bekannter Weise ein Gehäuse 12 aufweist, an dem ein Schwimmsattel 14 einstückig ausgebildet ist, der eine hier nicht dargestellte Bremsscheibe übergreift.

In dem Gehäuse 12 befindet sich eine Hydraulikkammer 16, in der ein Bremskolben 18 abdichtend und entlang seiner Mittellängsachse A verschieblich aufgenommen ist. Zur Versorgung der Hydraulikkammer 16 mit Hydraulikfluid ist außen an der Fahrzeugbremse 10 ein Anschluss 20 vorhanden, der mit einer hier nicht dargestellten Bremsdruckgebereinheit, beispielsweise einer über ein Bremspedal betätigbaren Bremskraftverstärker/Hauptzylinder-Einheit, in Verbindung steht. Bei einer Betätigung der Bremsdruckgebereinheit wird das Hydraulikfluid in der Hydraulikkammer 16 unter Druck gesetzt, so dass sich der Bremskolben 18 entlang der Achse A nach links verschiebt, um nicht dargestellte Reibbeläge mit der ebenfalls nicht dargestellten Bremsscheibe in Reibungseingriff zu bringen. Wird die Betätigung der Bremsdruckgebereinheit beendet, kann Hydraulikfluid aus der Hydraulikkammer 16 wieder zurück in Richtung der Bremsdruckgebereinheit strömen, so dass der Bremskolben 18 sich längs der Achse A zurückverschiebt, um die Reibbeläge außer Eingriff mit der Bremsscheibe zu bringen. Ein mit 22 bezeichnetes, radial umlaufendes Dichtelement, das den Bremskolben 18 in der Hydraulikkammer 16 abdichtet, unterstützt die Rückstellung des Bremskolben 18, indem es nach dem "Rollback"-Prinzip eine elastische Rückstellkraft auf den Bremskolben 18 ausübt. Die soeben beschriebene, durch eine hydraulische Betätigung hervorgerufene Funktion der Scheibenbremse 10 sowie deren weiterer konstruktiver Aufbau ist Fachleuten auf diesem Gebiet wohlbekannt und braucht daher nicht näher erläutert zu werden.

Damit die gezeigte Fahrzeugbremse 10 nicht nur die zuvor erläuterte Funktion einer hydraulischen Betriebsbremse erfüllen kann, sondern auch als Park- oder Feststellbremse verwendet werden kann, ist eine allgemein mit 24 bezeichnete Spindel/Mutter-Anordnung vorhanden, die eine koaxial zur Achse A angeordnete Spindel 26 mit einem Außengewinde 28 und eine im wesentlichen hülsenförmige Mutter 30 aufweist, die mit einem zum Außengewinde 28 passenden Innengewinde 32 versehen ist.

Die Spindel/Mutter-Anordnung 24 dient dazu, eine Drehbewegung der Spindel 26 in eine Translationsbewegung der Mutter 30 umzusetzen, die hierzu mittels eines in sie eingreifenden, am Bremskolben 18 befestigten und aus diesem parallel zur Achse A hervorstehenden Führungsstift 34 an einer Drehung gehindert ist. Wie gut aus Fig. 1 zu erkennen ist, ist der Bremskolben 18 als rechtsseitig offener Hohlkolben ausgeführt und die Spindel/Mutter-Anordnung 24 befindet sich zum größten Teil innerhalb des hohlen Bremskolbens 18 und somit innerhalb der Hydraulikkammer 16. Die Spindel 26 ist im Gehäuse 12 abgestützt und mittels eines Lagers 36 drehbar gelagert. Eine Wellendichtung 38 dichtet die Spindel 26 im Gehäuse 12 ab, um die Dichtheit der Hydraulikkammer 16 zu gewährleisten.

Zum Drehantrieb der Spindel 26 dient eine allgemein mit 40 bezeichnete Einheit aus einem Elektromotor 42 und einem damit gekoppelten Untersetzungsgetriebe 44, welches seinerseits mit dem aus dem Gehäuse 12 herausstehenden Endabschnitt der Spindel 26 betrieblich gekoppelt ist. Das Untersetzungsgetriebe 44 hat eine Gesamtuntersetzung von 200:1, damit der Elektromotor 42 relativ klein gewählt werden kann und dennoch eine ausreichend große Zuspannkraft sichergestellt ist. Die Einheit 40 aus Elektromotor 42 und Untersetzungsgetriebe 44 ist eine separat handhabbare Unterbaugruppe, die nicht nur mit der gezeigten Scheibenbremse 10, sondern auch mit anderen Scheibenbremsen kombinierbar ist. Der Elektromotor 42 ist dabei so angeordnet, dass seine Abtriebswelle 46 sich parallel zur Achse A erstreckt und auf der vom Bremskolben 18 abgewandten Seite aus dem Gehäuse des Elektromotors 42 austritt. Diese Anordnung ist besonders platzsparend und ermöglicht es darüber hinaus, die Einheit 40 bezogen auf die Fläche B in jeder beliebigen Winkellage am Gehäuse 12 der Fahrzeugbremse 10 zu montieren. Eine Anpassung an vorgegebene Beschränkungen, die beispielsweise aus in der Nähe der Fahrzeugbremse 10 vorhandenen Fahrwerkskomponenten resultieren können, lässt sich somit auf einfache Weise vornehmen.

Es wird nun die Feststellbremsfunktion der gezeigten Fahrzeugbremse 10 beschrieben: Zum Feststellen wird zunächst der Elektromotor 42 von einem elektronischen Steuergerät 48 derart angesteuert, dass sich seine Abtriebswelle 46 in einer ersten Richtung dreht. Die Drehung der Abtriebswelle 46 wird über das Untersetzungsgetriebe 44 auf die Spindel 26 übertragen, die sich somit ebenfalls in einer ersten Richtung dreht, in der durch Herausschrauben der Mutter 30 eine Verlängerung der Spindel/Mutter-Anordnung 24 bewirkt wird. Die Mutter 30 wird also bezogen auf Fig. 1 längs der Achse A translatorisch nach links verschoben und gelangt mit ihrem ringförmigen Flansch 50 in Anlage mit dem Boden des Bremskolbens 18. Bei einer weiteren Drehung der Spindel 26 in der ersten Drehrichtung drückt dann die Mutter 30 den Bremskolben 18 nach links, wodurch letzterer den hier nicht dargestellten Reibbelag gegen die ebenfalls nicht dargestellte Bremsscheibe presst. Ist dieser Zustand erreicht, kann der Elektromotor 42 abgestellt werden. Da die Gewindepaarung der beiden Gewinde 28 und 32 selbsthemmend ist, bleibt die erreichte Stellung Spindel/Mutter-Anordnung 24 auch nach dem Abschalten des Elektromotors 42 erhalten.

Zum Lösen der Feststellbremse wird der Elektromotor 42 vom Steuergerät 48 so angesteuert, dass sich seine Abtriebswelle 46 in der entgegengesetzten Richtung dreht. Diese Drehung wird wiederum auf die Spindel 26 übertragen, so dass auch sie sich entgegengesetzt zur ersten Drehrichtung dreht und in die Mutter 30 hineinschraubt, wodurch die Mutter 30 längs der Achse A translatorisch nach rechts bewegt wird. Der Bremskolben 18 wird so druckentlastet und kann sich anschließend ebenfalls nach rechts zurückbewegen, so dass die Reibbeläge außer Eingriff mit der Bremsscheibe kommen.

Um ein Lösen der festgestellten Fahrzeugbremse 10 auch ohne die Motor/Getriebe-Einheit 40 ermöglichen, kann beispielsweise die Spindel 26 oder auch die Abtriebswelle 46 des Elektromotors 42 von außen zugänglich sein, so dass mittels einer aufsteckbaren Kurbel durch entsprechende Drehung die Mutter 30 nach rechts bewegt werden kann. Ein solches manuelles Rückstellen der Mutter 30 kann auch im Rahmen eines Wechsels der Reibbeläge erforderlich sein.

Damit eine optimale Funktion der Fahrzeugbremse 10 gewährleistet ist, darf im unbetätigten Zustand der Fahrzeugbremse 10 ein Abstand X zwischen der Mutter 30 und dem Boden des Bremskolbens 18 ein gewisses Maß nicht überschreiten. In der Praxis wird ein Abstand X von 0,5 mm als optimal angesehen. Das Einhalten dieses Abstandes X ist zum einen erforderlich, um in einer möglichst kurzen Zeit, d.h. in etwa 1 Sekunde, die gewünschte maximale Zuspannkraft der Feststellbremse zu erreichen. Zum anderen soll die Rückstellung des Bremskolbens nach einer hydraulischen Betriebsbremsung nicht dadurch behindert sein, dass der Bremskolben 18 vorzeitig an der Mutter 30 anstößt, da sonst ein Restschleifmoment zwischen der sich drehenden Bremsscheibe und den Reibbelägen entstehen könnte.

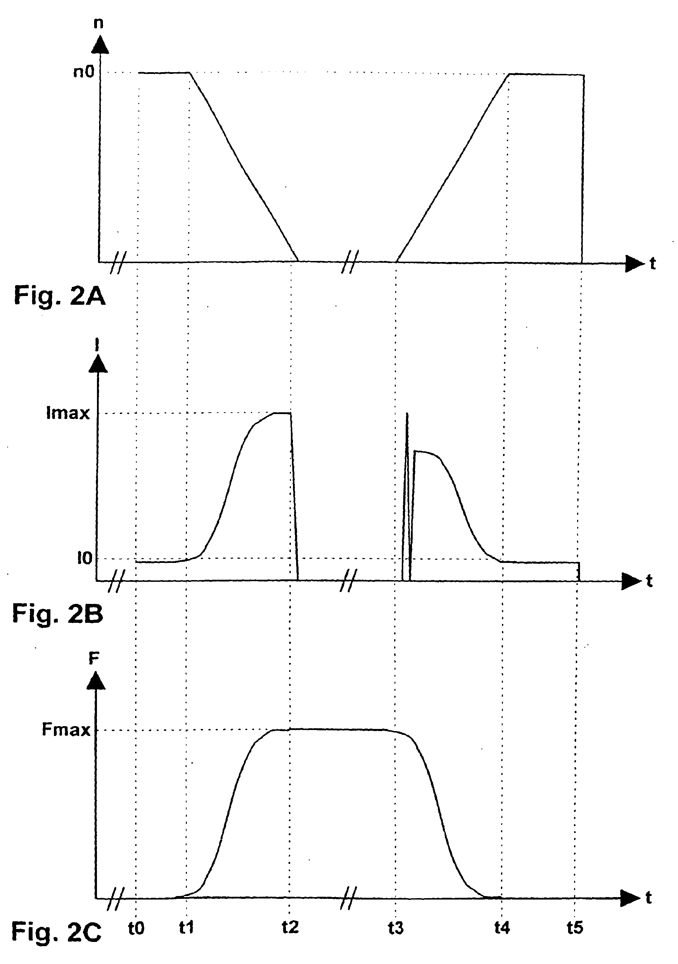

Unter Bezugnahme auf Fig. 2 wird im folgenden ein Verfahren zum Betreiben der Fahrzeugbremse 10 als Feststellbremse beschrieben, mit dem eine exakte Einstellung des Abstandes X gewährleistet ist.

In Fig. 2A ist die Drehzahl n der Abtriebswelle 46 des Elektromotor 42 über der Zeit dargestellt, in Fig. 2B die Stromaufnahme I des Elektromotors 42 über der Zeit, und in Fig. 2C ist die Zuspannkraft F der Fahrzeugbremse 10 über der Zeit aufgetragen, wobei der Zeitmaßstab in den Fig. 2A, 2B und 2C jeweils identisch ist.

Zum Feststellen der Fahrzeugbremse 10 mittels der Spindel/Mutter-Anordnung 24 muß zunächst die Mutter 30 durch eine Drehung der vom Elektromotor 42 angetriebenen Spindel 26 in Anlage an den Bremskolben 18 gebracht werden. Aus Fig. 2A bis 2C ist hierzu ersichtlich, dass vom Zeitpunkt t₀, also demjenigen Zeitpunkt, zu dem das Steuergerät 48 den Befehl erhält, die Fahrzeugbremse 10 mechanisch feststellen, bis zum Zeitpunkt t₁ der Elektromotor 42 mit einer nahezu konstanten, hohen Drehzahl und mit nahezu konstanter, niedriger Stromaufnahme betrieben wird, da noch keine Zuspannkraft aufzubringen ist.

Wenn zum Zeitpunkt t₁ die Mutter 30 am Boden des Bremskolbens 18 zur Anlage kommt, ist dies an einem Knick im Verlauf der Drehzahl n sowie der Stromaufnahme I feststellbar. Die vor dem Knick geltenden Werte für die Drehzahl und Stromaufnahme werden als Referenzwerte n₀ und I₀ in einem Speicher des Steuergerätes 48 abgelegt. Wie aus den Diagrammen ersichtlich, fällt ab dem Zeitpunkt t₁ die Drehzahl n des Elektromotors 42 rasch ab und korrespondierend hierzu steigt die Stromaufnahme I einhergehend mit der Zuspannkraft F deutlich an, bis zum Zeitpunkt t₂ die gewünschte Zuspannkraft Fₘₐₓ erreicht ist. Der Elektromotor 42 wird nun abgeschaltet und dementsprechend nehmen die Drehzahl n und der Strom I den Wert 0 an. Die Zuspannkraft verharrt aufgrund der selbsthemmenden Ausbildung der Spindel/Mutter-Anordnung 24 auf dem Wert Fₘₐₓ.

Erfolgt später, nämlich zum Zeitpunkt t₃, ein Lösen der Feststellbremse durch Einschalten des Elektromotors 42, so ist dies zunächst an einem Einschaltspitzenimpuls im Verlauf der Stromaufnahme I erkennbar, woraufhin letztere nahezu proportional zur Zuspannkraft F abnimmt, während sich gleichzeitig die Drehzahl n entsprechend erhöht. In dieser Phase werden die Drehzahl n und der Strom I mit den zuvor im Steuergerät abgelegten Referenzwerten n₀ und I₀ fortlaufend verglichen, bis zum Zeitpunkt t₄ die Drehzahl n und der Strom I mit den Referenzwerten n₀ bzw. I₀ übereinstimmen. Dies bedeutet, dass die Mutter 30 beginnt, nicht mehr am Boden des Bremskolben 18 anzuliegen, d.h. dass keine Zuspannkraft F mehr vorhanden ist. Deshalb stellt sich ab dem Zeitpunkt t₄ wieder ein nahezu konstanter, niedriger Strom I und eine nahezu konstante, hohe Drehzahl n ein, bis zum Zeitpunkt t₅ der gewünschte Abstand X zwischen der Mutter 30 und dem Boden des Bremskolbens 18 erreicht ist, woraufhin der Elektromotor 42 abgeschaltet wird.

Aufgrund der bekannten Untersetzungsverhältnisse zwischen der Abtriebswelle 46 des Elektromotors 42 und der Spindel 26 kann der gewünschte Abstand X einfach dadurch eingestellt werden, dass das Zeitintervall zwischen den Zeitpunkten t₄ und t₅ entsprechend gewählt wird. Im dargestellten Ausführungsbeispiel wird jedoch ein Hallsensor 52 eingesetzt, der die Umdrehungen pro Zeit der Abtriebswelle 46 des Elektromotors 42 misst. Dieser Hallsensor 52 ist auf ein nicht gesondert dargestelltes Abtriebsritzel ausgerichtet, das mit dem freien Ende der Abtriebswelle 46 des Elektromotors 42 drehfest gekoppelt ist, und stellt pro Umdrehung dieses Abtriebsritzels eine Anzahl von Rechteckimpulsen bereit, die der Zähneanzahl des Abtriebsritzels entspricht und die vom Steuergerät 48 als Drehzählimpulse verarbeitet werden. Da der Zusammenhang zwischen der Rotationsbewegung der Abtriebswelle 46 und der Translationsbewegung der Mutter 30 bei einer gegebenen Untersetzung bekannt ist, kann durch Vorgabe einer bestimmten Anzahl von Drehzählimpulsen der gewünschte Abstand X sehr präzise eingestellt werden. Beginnend mit dem Zeitpunkt t₄ braucht hierzu nur die vorbestimmte Anzahl an Drehzählimpulsen in einem Zähler aufsummiert zu werden und bei Erreichen der vorbestimmten Anzahl wird der Elektromotor 42 abgeschaltet.

## Patentansprüche

1. Verfahren zum Betreiben einer hydraulischen Fahrzeugbremse (10), die einen Bremskolben (18), der auf ein Reibglied wirkt und mittels Hydraulikdruck, welcher in eine mit dem Bremskolben (18) zusammenwirkende Hydraulikkammer (16) einleitbar ist, in eine Betätigungsstellung verschiebbar ist, in der er das Reibglied gegen einen Rotor der Fahrzeugbremse presst, und eine von einem Elektromotor (42) angetriebene, zur Mittelachse (A) des Bremskolbens (18) koaxiale Spindel/Mutter-Anordnung (24) zum mechanischen Feststellen des Bremskolbens (18) in der Betätigungsstellung aufweist, deren Mutter (30) gegen eine Drehung gesichert ist und durch eine Rotation der Spindel (26) in Abhängigkeit der Drehrichtung translatorisch längs der Achse (A) entweder in Anlage an den Bremskolben (18) oder vom Bremskolben (18) weg bewegt wird, als Feststellbremse, mit den Schritten:
- Drehantreiben der Spindel (26) mittels eines Elektromotors (42) in einer ersten Drehrichtung derart, dass die Mutter (30) der Spindel/Mutter-Anordnung (24) zum Bremskolben (18) hin bewegt wird, **gekennzeichnet durch** die Schritte des
- Messens der Drehzahl n und der Stromaufnahme I des Elektromotors (42) in Abhängigkeit der Zeit,
- Erfassens eines plötzlichen Drehzahlabfalls und eines damit korrespondierenden Anstiegs der Stromaufnahme und Ablegen des davor geltenden Wertes für Drehzahl und/oder Stromaufnahme in einem Speicher als Referenzwert(e) n₀ bzw. I₀,
- weiteren Drehantreibens der Spindel (26) in der ersten Drehrichtung bis zum Erreichen einer vorgegebenen, maximalen Stromaufnahme Iₘₐₓ, die mit einer vorgegebenen Zuspannkraft korrespondiert, und darauffolgendes Abschalten des Elektromotors,
- Drehantreibens der Spindel (26) in einer zweiten Drehrichtung entgegengesetzt zur ersten Drehrichtung und Vergleichen der momentanen Drehzahl n und/oder der momentanen Stromaufnahme I mit dem Referenzwert n₀ bzw. I₀,
- Erfassens eines Zeitpunktes (t₄), an dem n = n₀ und/oder I = I₀ gilt, und des
- weiteren Drehantreibens der Spindel (26) in der zweiten Drehrichtung zum Einstellen eines vorgegebenen Abstandes X zwischen der Mutter (30) und dem Bremskolben (18).

2. Verfahren nach Anspruch 1,
**dadurch gekennzeichnet, dass** das weitere Drehantreiben der Spindel (26) in der zweiten Drehrichtung ab dem Zeitpunkt (t₄) für eine festgelegte Zeitdauer erfolgt, die dem gewünschten Abstand X entspricht.

3. Verfahren nach Anspruch 1,
**dadurch gekennzeichnet, dass** das weitere Drehantreiben der Spindel (26) in der zweiten Drehrichtung ab dem Zeitpunkt (t₄) solange erfolgt, bis ein bestimmte Anzahl von Drehzählimpulsen erreicht ist, die dem gewünschten Abstand X entspricht.

4. Verfahren nach einem der Ansprüche 1 bis 3,
**dadurch gekennzeichnet, dass** aus einer Reihe der jeweils in dem Speicher abgelegten Referenzwerte n₀ und/oder I₀ ein Mittelwert n₀ₘ und/oder I₀ₘ gebildet wird.

5. Verfahren nach einem der Ansprüche 1 bis 4,
**dadurch gekennzeichnet, dass** die festgelegte, maximale Stromaufnahme Iₘₐₓ automatisch parameterabhängig variiert wird, insbesondere in Abhängigkeit der Fahrzeugbeladung und/oder der Steilheit der Fahrbahnoberfläche.

## Claims

1. A method for operating a hydraulic vehicle brake (10) comprising a brake piston (18), which acts upon a friction member and which, by means of hydraulic pressure that can be supplied into a hydraulic chamber (16) cooperating with the brake piston (18), can be moved into an actuating position in which it presses the friction member against a rotor of the vehicle brake, and a spindle/nut arrangement (24) that is driven by an electric motor (42) and is arranged coaxially with the centre axis (A) of the brake piston (18) for mechanically blocking the brake piston (18) in the actuating position, the nut (30) of said arrangement (24) being secured against rotation and, by rotation of the spindle (26), being moved in dependence upon the direction of rotation translatorily along the axis (A) either in abutment against the brake piston (18) or away from the brake piston (18), as parking brake, said method comprising the steps of:
- rotating the spindle (26) by means of an electric motor (42) in a first direction of rotation in such a manner that the nut (30) of the spindle/nut arrangement (24) is moved in the direction of the brake piston (18);
**characterized by** the steps of:
- measuring the number of revolutions n and the power consumption I of the electric motor (42) in dependence upon the time;
- detecting a sudden drop of the number of revolutions and a rise of the power consumption corresponding thereto and storing the value previously valid for number of revolutions and/or power consumption in a memory as reference value(s) n₀ and I₀ respectively;
- further rotating the spindle (26) in the first direction of rotation until a preset maximum power consumption Iₘₐₓ corresponding to a preset clamping force is reached, and subsequent switching off the electric motor;
- rotating the spindle (26) in a second direction of rotation counter to the first direction of rotation and comparing the current number of revolutions n and/or the current power consumption I to reference value n₀ and I₀ respectively;
- establishing a time (t₄) at which n = n₀ and/or I = I₀ applies, and
- further rotating the spindle (26) in the second direction of rotation for adjusting a preset distance X between the nut (30) and the brake piston (18).

2. The method according to Claim 1,
**characterised in that** the further rotating of the spindle (26) in the second direction of rotation as of the time (t₄) is effected for a set period of time that corresponds to the desired distance X.

3. The method according to Claim 1,
**characterised in that** the further rotating of the spindle (26) in the second direction of rotation as of the time (t₄) is effected until a specific number of revolution count pulses corresponding to the desired distance X is achieved.

4. The method according to one of Claims 1 to 3,
**characterised in that** a mean value n₀ₘ and/or I₀ₘ is formed from a series of the reference values n₀) and/or I₀ in each case stored in the memory.

5. The method according to one of claims 1 to 4,
**characterised in that** the preset maximum power consumption Iₘₐₓ is automatically varied in parameter-dependent manner, especially in dependency upon the vehicle load/and or the steepness of the road surface.

## Revendications

1. Procédé pour faire fonctionner un frein hydraulique de véhicule (10) comme frein d'arrêt, procédé dans lequel le frein comprend un piston de frein (18) agissant sur un élément de friction et pouvant être déplacé dans une position d'actionnement par une pression hydraulique qui peut être introduite dans une chambre hydraulique (16) coopérant avec le piston de frein (18), le piston de frein pressant dans cette position d'actionnement l'élément de friction contre un rotor du frein de véhicule, et un dispositif à tige filetée et écrou (24) disposé coaxialement à l'axe médian (A) du piston de frein (18) et entraîné par un moteur électrique (42), ce dispositif servant à arrêter mécaniquement le piston de frein (18) dans la position d'actionnement, l'écrou (30) du dispositif étant assuré contre une rotation et étant déplacé par une rotation de la tige filetée (26), selon le sens de la rotation, dans un mouvement de translation le long de l'axe (A) soit jusqu'au contact avec le piston de frein (18) soit en s'éloignant du piston de frein (18), ce procédé comprenant les étapes suivantes :
- on entraîne en rotation la tige filetée (26) au moyen d'un moteur électrique (42) selon un premier sens de rotation de telle sorte que l'écrou (30) du dispositif à tige filetée et écrou (24) est déplacé en direction du piston de frein (18),
**caractérisé par** les étapes suivantes :
- on mesure le régime n et la consommation de courant I du moteur électrique (42) en fonction du temps,
- on saisit une chute subite de régime et une montée correspondante de la consommation de courant, et on enregistre la valeur valable auparavant du régime et/ou de la consommation de courant dans une mémoire à titre de valeur(s) de référence n₀, I₀, respectivement,
- on continue l'entraînement en rotation de la tige filetée (26) selon le premier sens de rotation jusqu'à ce qu'une consommation de courant maximale prédéterminée lₘₐₓ soit atteinte qui correspond à une force de serrage prédéterminée, et on arrête ensuite le moteur électrique,
- on entraîne en rotation la tige filetée (26) dans un second sens de rotation, inverse au premier sens de rotation, et on compare le régime momentané n et/ou la consommation de courant momentanée I, à la valeur de référence n₀, I₀, respectivement,
- on saisit un moment (t₄) où n = n₀ et/ou I = I₀, et
- on continue l'entraînement en rotation de la tige filetée (26) selon le second sens de rotation pour ajuster une distance prédéterminée X entre l'écrou (30) et le piston de frein (18).

2. Procédé selon la revendication 1, **caractérisé en ce que** l'entraînement en rotation de la tige filetée (26) selon le second sens de rotation est continué, à partir du moment (t₄), pendant une durée déterminée qui correspond à la distance désirée X.

3. Procédé selon la revendication 1, **caractérisé en ce que** l'entraînement en rotation de la tige filetée (26) selon le second sens de rotation est continué à partir du moment (t₄) jusqu'à ce qu'un certain nombre d'impulsions de comptage de rotation soit atteint qui correspond à la distance désirée X.

4. Procédé selon l'une des revendications 1 à 3, **caractérisé en ce qu'**une valeur moyenne N₀ₘ et/ou I₀ₘ est formée à partir d'une série de valeurs de référence n₀ et/ou l₀, toutes enregistrées dans la mémoire.

5. Procédé selon l'une des revendications 1 à 4, **caractérisé en ce qu'**on fait varier la consommation de courant maximale déterminée Iₘₐₓ automatiquement en fonction de paramètres en particulier en fonction de la charge du véhicule et/ou de la pente de la surface de la chaussée.
